# EUROPÄISCHE PATENTSCHRIFT

(11) **EP 1 151 920 B1**
(45) Veröffentlichungstag und Bekanntmachung des Hinweises auf die Patenterteilung: **18.12.2002**
(21) Anmeldenummer: 00109574.4
(22) Anmeldetag: 05.05.2000
(51) Int. Cl.: B64F 5/00, G06K 19/073

(54) **Verfahren zur Verwaltung von zu überprüfenden Geräten der Luftfahrtindustrie**
Managing method used during the inspection of aeronautical components
Procédé de gestion utilisé lors du contrôle d'appareils pour l'industrie aéronautique

(43) Veröffentlichungstag der Anmeldung: 07.11.2001
(73) Patentinhaber: EDOMAT (Deutschland) Treuhand- und Vermögensverwaltungsgesellschaft mbH, 21423 Winsen/Luhe (DE)
(72) Erfinder: Odemann, Christian, Dr. rer.pol., 4056 Basel (CH)
(74) Vertreter: Richter, Werdermann & Gerbaulet

(56) Entgegenhaltungen:
- FR-A- 2 715 750
- US-A- 4 746 830
- US-A- 5 469 363

## Beschreibung

Die Erfindung betrifft ein Verfahren zur Verwaltung von Geräten der Luftfahrtindustrie gemäß dem Oberbegriff des Anspruches 1.

Ein solches Verfahren ist aus der Druckschrift US-A-5,469,363 bekannt.

Im sogenannten "After Sales" Bereich der Luftfahrtindustrie gibt es zahlreiche teure und hochwertige technische Geräte, insbesondere spezielle Werkzeuge und Ersatzteile, welche regelmäßig und/oder im Bedarfsfalle zum Zwecke einer Überprüfung, Wartung, Überholung, Kalibrierung, Zertifizierung, Reparatur od. dgl. an den Hersteller beziehungsweise an einen Spezialbetrieb gesandt werden müssen. Bei den Geräten kann es sich um sogenannte Linereplacement Units (LRU) oder Maintenancereplacement Unit (MRU) handeln, welche in einem Flugzeug eingebaut sind und bei C-oder D-Checks der Flugzeuge überholt werden müssen. Ebenso kann es sich um am Boden stationierte Geräte wie sogenanntes Ground Support Equipment (GSE) handeln, die benötigt werden, um bei C-/D-Checks oder anderen Bedarfsfällen die durchzuführenden Arbeiten zu unterstützen. Diese Geräte werden bei der Herstellung schon mit maschinenlesbaren individuellen Kennungen ausgestattet, um so schon bei der Anlieferung an die Flugzeugmontage Optimierungspotentiale zu erheben. Nach ihrem Einsatz müssen diese Geräte zum Kalibrieren beziehungsweise zum erneuten Zertifizieren an den Hersteller bzw. an eine vom Hersteller bzw. vom Endverbraucher zertifizierte Reparatur-Werkstatt zurückgesandt werden. Diese Verschickung der Geräte erfordert eine Verwaltung und Kontrolle sowie das Vorhalten notwendiger Begleitpapiere (Zertifikate), so dass ein erheblicher logistischer Aufwand entsteht, der zudem sehr fehleranfällig ist.

In der US-A-5,469,363 wird ein System zur fälschungssicheren Verfolgung von sicherheitsrelevanten Flugzeugteilen auf dem Weg vom Hersteller zum Endabnehmer beschrieben, mit dem das Einbauen von minderwertigen Austauschteilen verhindert werden soll. Hierzu wird dem Teil ein Tag unverlierbar beigegeben, das einen Mikroprozessor und ein EEPROM enthält, und mit dem ein berührungsloser Datenaustausch mittels einer PC-gesteuerten Dateninterfaceeinheit möglich ist. Alle für die Verfolgung des Weges wichtigen Daten sowie Identifizierungsinformationen sind und werden in dem EEPROM des Tag gespeichert. Es wird dem Teil daher ein den Weg des Teils aufzeigendes "Begleitpapier" mitgegeben, allerdings in elektronischer Form als Dateninhalt des EEPROM des Tag. Dieses "Begleitpapier" ist an das Teil gebunden und kann nur ausgelesen und verändert werden, wenn das Teil vorliegt.

Vor diesem Hintergrund war es Aufgabe der vorliegenden Erfindung, ein Verfahren zur Verwaltung der genannten Geräte der Luftfahrtindustrie bereitzustellen, welches kostengünstiger, effizienter und sicherer ist, ohne dass dabei papierene oder elektronische das Gerät betreffende Informationen enthaltene Begleitpapiere verwendet werden.

Diese Aufgabe wird durch ein Verfahren mit den Merkmalen des Anspruchs 1 gelöst. Vorteilhafte Ausgestaltungen sind in den Unteransprüchen enthalten.

Danach besteht das erfinderische Verfahren darin, dass die Zustandsdaten der Geräte und die Kennungen in einer zentralen Datenbank gespeichert werden, und dass ein Fernzugriff auf die zentrale Datenbank möglich ist, und zwar unter Ausschluss eines Rückgriffes auf die Geräte betreffende Informationen enthaltene papierene oder elektronische Begleitpapiere bei der Geräteverschickung.

Das Verfahren dient demnach der Verwaltung von Geräten der Luftfahrtindustrie, welche zur Überprüfung, Wartung, Kalibrierung, Zertifizierung, Reparatur u. dgl. zu einem Spezialbetrieb gesandt werden müssen. Es ist dadurch gekennzeichnet, dass die Geräte mit einer maschinenlesbaren individuellen Kennung versehen werden, dass die Zustandsdaten der Geräte in einer zentralen Datenbank gespeichert werden, und dass ein Femzugriff auf die Datenbank möglich ist. Durch die genannten Maßnahmen kann der Verwaltungsaufwand für das Versenden der Geräte deutlich reduziert und weitgehend automatisiert werden. Dies spart Zeit und Kosten und führt gleichzeitig noch zu einer verringerten Fehleranfälligkeit.

Die Zuteilung einer eindeutigen und individuellen Kennung an jedes Gerät und der Einsatz einer Datenbank, in welcher die Kennung und die zugehörigen Zustandsdaten der Geräte gespeichert sind, liefert zu jeder Zeit umfassende und vollständige Informationen über die Geräte, welche zudem fernabgefragt werden können. Somit sind diese Informationen überall und unabhängig vom momentanen Aufenthaltsort des Gerätes verfügbar. Die Erstellung von Begleitpapieren kann hierdurch weitgehend oder vollständig eingespart werden, da alle notwendigen Informationen jederzeit in der Datenbank abrufbar sind. Die Maschinenlesbarkeit der Kennung sorgt dafür, dass das Verfahren automatisiert werden kann und dass die Kennungen schnell und zuverlässig mit einem geeigneten Lesegerät erfasst werden können.

Zu den Zustandsdaten, welche in der Datenbank gespeichert werden, können insbesondere der aktuelle Aufenthaltsort des Gerätes, der übliche Verwendungsort des Gerätes, der Zertifizierungsstatus einschließlich der entsprechenden Dokumente, der Kalibrierungsstatus, das Alter des Gerätes und/oder zukünftige Überprüfungstermine des Gerätes gehören. Ebenso können die Zustandsdaten eines Gerätes mit denjenigen anderer zugehöriger Geräte verknüpft werden. Mit derartigen Daten kann sich der Anwender jederzeit und von jedem Ort aus ein vollständiges Bild über den Wartungszustand des Gerätes machen.

Vorzugsweise wird die Kennung des Gerätes gleichzeitig als Autorisierungsnachweis für den Zugriff auf die in der Datenbank gespeicherten Daten dieses Gerätes verwendet. Hierdurch wird sichergestellt, dass die gespeicherten Daten nicht unberechtigterweise verwendet werden können und dass kein Missbrauch mit den Daten möglich ist. Auch die Art der Maschinenlesbarkeit der Kennung kann so ausgestaltet werden, dass die Kennung nur mit einem speziellen Lesegerät erfassbar ist, welches die Kennung dann im Falle eines Zugriffs auf die Datenbank verschlüsselt (Paßwort) hieran übermittelt.

Die in der Datenbank gespeicherten Daten über die Geräte werden vorzugsweise dazu verwendet, die logistische Leitung der Verteilung der Geräte zu optimieren. So kann beispielsweise die Versendung von mehreren verschiedenen Geräten von einem Anwender zum Hersteller oder von einem Hersteller zum Anwender gebündelt werden, wenn anhand der Datenbank festgestellt wird, dass die Einsendung beziehungsweise Rücksendung dieser Geräte in etwa zum selben Termin fällig wird. Ferner kann die Zuteilung von Geräten an verschiedene Anwender verbessert werden, wenn der Hersteller einen Überblick über die vorhandene Anzahl einsatzfähiger Geräte bei den verschiedenen Anwendern hat. In diesem Falle kann das Gerät eines ausreichend ausgestatteten Anwenders im Bedarfsfalle auch kurzfristig an einen anderen Anwender gesandt werden, welcher auf dieses Gerät dringend angewiesen ist. Hierdurch wird seitens der Anwender die Notwendigkeit beseitigt beziehungsweise reduziert, sich umfangreiche Ersatzteillager wichtiger Geräte zu halten.

Die individuelle Kennung eines Gerätes wird vorzugsweise von einem Radiofrequenz Transponder (Radio Frequency Transponder RFT) oder von einem Radiofrequenz Transponder mit Kryptographie (Radio Frequenz Transpondern RFT mit Kryptographie) bereitgestellt. Ein Transponder antwortet auf eine Anfrage hin in einer vorgegebenen bzw. einprogrammierten Weise. Ein derartiges Gerät hat den Vorteil, dass es flexibel hinsichtlich der gespeicherten Kennungen ist, dass ein Auslesen der Kennungen aus einer begrenzten räumlichen Entfernung ohne direkten Kontakt zum Gerät möglich ist, und dass die Kennung vor unberechtigtem Zugriff geschützt ist. Insbesondere kann das Auslesen der Kennung aus dem RFT die Eingabe eines proprietären Codes voraussetzen.

Die Erfindung betrifft daher auch die Verwendung eines Radiofrequenz Transponders zur Durchführung eines Verfahrens der oben geschilderten Art.

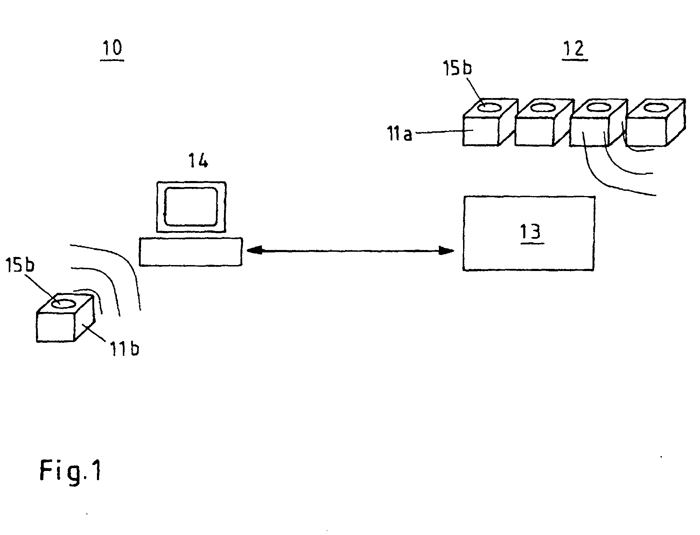

Ein Ausführungsbeispiel der Erfindung wird nachstehend anhand der Zeichnung in Fig. 1 näher erläutert.

Die einzige Figur 1 zeigt schematisch die Abläufe bei der Verwaltung von Geräten aus dem Bereich der Luftfahrtindustrie, welche zu Zwecken der Wartung, Kalibrierung, Zertifizierung oder dergleichen vom Anwender 10 zu einem Spezialbetrieb 12, zum Beispiel dem Hersteller des Gerätes, gesandt werden müssen. Die Geräte 11a, 11b sind dabei erfindungsgemäß mit einem Radiofrequenz Transponder (RFT und/oder bar code) 15a, 15b ausgerüstet, der mittels eines Lesegerätes überall auf der Welt gelesen werden kann. Der RFT ist mit einer eindeutigen und einmaligen Nummer versehen und kann darüber hinaus unterschiedliche Informationen speichern. Der passive RFT ist nur mittels eines proprietären Codes zu lesen, um so den Gegebenheiten der Luftfahrtindustrie zu entsprechen.

Die wichtigsten Zustandsdaten der Geräte 11a, 11b werden in einem Zentralrechner in einer Datenbank 13 unter der im RFT gespeicherten Nummer hinterlegt. Die Datenbank 13 wird vorzugsweise vom Hersteller 12 des Gerätes unterhalten, grundsätzlich ist jedoch ihr Standort beliebig. Die Datenband wird vom Hersteller ursprünglich gefüttert und später durch die Benutzer des Gerätes dann erweitert oder abgedatet sowie bei Reparatur und Überholvorgängen bzw. Zertifizierungen abgedatet. Die Datenbank wird von einem Serviceuntemehmen betrieben.

Die Datenbank 13 kann fernabgefragt werden, was zum Beispiel über geeignete Netze wie das Internet erfolgen kann. Ein Zugriff auf die Datenbank ist somit quasi weltweit möglich. Mit Hilfe des entsprechenden Lesegerätes kann ein autorisierter Anwender aus der Datenbank die dort hinterlegten Zertifikate oder sonstigen Informationen abrufen. Auf diese Weise kann der Versand der Geräte 11a, 11b im Prinzip papierlos erfolgen, was den Aufwand und die Kosten reduziert und gleichzeitig eine verringerte Fehleranfälligkeit zur Folge hat. Über den zentralen Rechner mit der Datenbank 13 kann femer der Teilefluss gesteuert und wirtschaftlich optimiert werden. Ein Vorteil der Erfindung liegt somit im verbesserten Tracen und Tracken sowie im Aufzeigen von Regelkreisen, die durch die RFT Nutzung optimiert werden können. Weiterhin kann ein schnellerer Teilefluss erreicht werden, und die Investitionen im Ersatzteilbereich lassen sich reduzieren. Nicht zuletzt können hierdurch auch die Liegezeiten der Flugzeuge für die Checks reduziert werden.

## Patentansprüche

1. Verfahren zur Verwaltung von Geräten der Luftfahrtindustrie, welche zur Überprüfung, Wartung, Kalibrierung, Zertifizierung und dergleichen zu einem Spezialbetrieb gesandt werden müssen und welche Geräte mit einer maschinenlesbaren individuellen Kennung versehen werden,
**dadurch gekennzeichnet,**
**dass** die Zustandsdaten der Geräte (11a, 11b) und die Kennungen (15a, 15b) in einer zentralen Datenbank (13) gespeichert werden, und dass ein Fernzugriff auf die Datenbank möglich ist, und zwar unter Ausschluss eines Rückgriffes auf die Geräte betreffende Informationen enthaltene papierene oder elektronische Begleitpapiere bei der Geräteverschickung.

2. Verfahren nach Anspruch 1,
**dadurch gekennzeichnet,**
**dass** zu den Zustandsdaten der aktuelle Aufenthaltsort, der Verwendungsort, der Zertifizierungsstatus, der Kalibrierungsstatus, das Alter und/oder zukünftige Überprüfungstermine gehören.

3. Verfahren nach einem der Ansprüche 1 oder 2,
**dadurch gekennzeichnet,**
**dass** die Kennung bzw. individuelles Paßwort eines Gerätes (11a, 11b) als Autorisierungsnachweis für den Zugriff auf seine in der Datenbank (13) gespeicherten Daten dient.

4. Verfahren nach einem der Ansprüche 1 bis 3,
**dadurch gekennzeichnet,**
**dass** die individuelle Kennung von einem Radiofrequenz Transponder (15a, 15b) bereitgestellt wird.

5. Verwendung eines Radiofrequenz Transponders (15a, 15b) zur Durchführung eines Verfahrens nach einem der Ansprüche 1 bis 4.

## Claims

1. Method for managing aeronautical components which must be sent to a special workshop for inspection, maintenance, calibration, certification and the like and which are provided with a machine readable individual identification,
**characterized in**
**that** the state data of the components (11a, 11b) and the identifications (15a, 15b) are stored in a central data bank (13) and that a remote access to the data bank is possible, namely to the exclusion of a resort to paper or electronic accompanying papers containing information concerning the components by the sending of the components.

2. A method according to claim 1,
**characterized in**
**that** the present stopping time, the place of use, the certification status, the calibration status, the age and/or future inspection dates belong to the state data.

3. A method according to any of the claims 1 or 2,
**characterized in**
**that** the identification or individual pass word of a component (11a, 11b) serves as an authorization proof for the access to its data stored in the data bank (13).

4. A method according to any of the claims 1 to 3,
**characterized in**
**that** the individual identification is made available by a radiofrequency transponder (15a, 15b).

5. Use of a radiofrequency transponder (15a, 15b) for carrying out a method according to any of the claims 1 to 4.

## Revendications

1. Procédé pour la gestion d'appareils de l'industrie aéronautique qui doivent être envoyés à une entreprise spécialisée pour contrôle, maintenance, calibrage, certification et équivalent et qui doivent être pourvus d'une identification individuelle lisible par machine,
**caractérisé en ce**
**que** les données d'état des appareils (11a, 11b) et les identifications (15a, 15b) sont mémorisées dans une banque centrale de données (13) et qu'un accès à distance à la banque de données est possible et ce, à l'exclusion d'un recours aux papiers d'accompagnement électroniques ou en papier qui contiennent des informations concernant les appareils lors de l'expédition des appareils.

2. Procédé selon la revendication 1,
**caractérisé en ce**
**que** le lieu de séjour actuel, le lieu d'utilisation, le statut de certification, le statut de calibrage, l'âge et/ou les dates de contrôle futures font partie des données d'état.

3. Procédé selon l'une des revendications 1 ou 2,
**caractérisé en ce**
**que** l'identification ou le mot de passe individuel d'un appareil (11a, 11b) sert comme preuve d'autorisation pour l'accès à ses données mémorisées dans la banque de données (13).

4. Procédé selon l'une des revendications 1 à 3,
**caractérisé en ce**
**que** l'identification individuelle est mise à disposition par un transpondeur à radiofréquence (15a, 15b).

5. Utilisation d'un transpondeur à radiofréquence (15a, 15b) pour exécuter un procédé selon l'une des revendications 1 à 4.
